# EUROPÄISCHE PATENTANMELDUNG

(11) **EP 1 162 716 A2**
(43) Veröffentlichungstag der Anmeldung: **12.12.2001**
(21) Anmeldenummer: 01113134.9
(22) Anmeldetag: 30.05.2001
(51) Int. Cl.: H02K 5/167, F16C 27/06, F16C 17/04

(54) **Elektromotor, insbesondere Lüftermotor**

(30) Priorität: 07.06.2000 DE 10027614
(71) Anmelder: Mannesmann VDO Aktiengesellschaft, 60388 Frankfurt am Main (DE)
(72) Erfinder: Kronenberg, Klaus, 65843 Sulzbach (DE); Jansa, Frank, 60385 Frankfurt (DE); Kriessler, Klaus, 61440 Oberursel (DE); Blume, Heinrich-Jochen, Dr., 64291 Darmstadt (DE); Strobel, Henry, 65843 Sulzbach (DE); Stolzlechner, Albert, 63150 Heusenstamm (DE)
(74) Vertreter: Keller, Thomas, Dipl.-Ing. (FH)

(57) **Zusammenfassung**

Bei einem Elektromotor mit einem Stator und einem Rotor, wobei der Rotor mindestens einen Permanentmagneten und eine Rotorwelle aufweist und der Stator mindestens zwei Spulen aufweist, die Bestromung mit Wechselströmen ein sich drehendes Magnetfeld erzeugen, durch den Rotor antreibbar ist und die Rotorwelle radial und axial gelagert ist, ist vorgesehen, daß der Rotor (4) durch mindestens eine elastische Anlaufscheibe (1a,1b) gelagert ist, wobei eine Anlaufscheibe (1a) axial auf einer Seite des Rotors (4) angeordnet ist.

## Beschreibung

Die Erfindung betrifft einen Elektromotor mit einem Stator und einem Rotor, wobei der Rotor mindestens einen Permanentmagneten und eine Rotorwelle aufweist und radial und axial gelagert ist und wobei der Stator mindestens zwei Spulen aufweist, die bei Bestromung mit Wechselströmen ein sich drehendes Magnetfeld erzeugen, durch den der Rotor antreibbar ist, insbesondere zur Verwendung als Lüftergebläse.

Aus dem Stand der Technik sind solche Motoren bekannt deren Rotor axial durch eine axiale Lagerung der Rotorwelle in einem Sinterlager realisiert ist. Nachteilig bei diesen Motoren ist es, daß durch einen überhöhten Verschleiß zwischen dem Sinterlager und der Rotorwelle zunächst eine starke Geräuschemission verursacht wird und es dann zu einem Totalausfall des Motors kommt. Aufgabe der Erfindung ist es daher, einen Motor anzugeben, der eine lange Standzeit hat und gleichzeitig niedrige Geräuschemissionen aufweist.

Diese Aufgabe wird erfindungsgemäß dadurch gelöst, daß der Rotor durch eine elastische Anlaufscheibe axial gelagert ist, wobei die elastische Anlaufscheibe axial auf einer Seite des Rotors angeordnet ist. Durch diese axiale Lagerung wird eine dauerhafte axiale Lagerung realisiert. Der Motor ist lageunabhängig einsetzbar, wenn eine zweite elastische Anlaufscheibe axial auf der anderen Seite des Rotors angeordnet ist. So kann der Rotor je nach seiner aktuellen Lage ständig die erste oder zweite Anlaufscheibe oder abwechselnd die erste und zweite Anlaufscheibe belasten. Weiterhin wird durch die Elastizität der Anlaufscheiben ein Stoßgeräusch verhindert, da bei einem Wechsel der Belastung der Anlaufscheiben die elastischen Anlaufscheiben ein Anschlagen des Rotors federnd dämpfen

Besonders bevorzugt sind elastische Anlaufscheiben, die aus einer gummiartigen Kunststoffmatrix bestehen, auf deren einen Seite Mikrofasern aufgebracht sind. Diese Anlaufscheiben sind besonders langlebig, da die Mikrofasern sich nicht von der Kunststoffmatrix lösen. Wenn die Mikrofasern stochastisch verteilt auf der Kunststoffmatrix angeordnet sind, ergibt sich auch durch dauernde Drehung des Motors in eine Richtung kein Kammeffekt.

Durch ein Schmiermittel in der elastischen Anlaufscheibe wird ein noch niedrigerer Reibwiderstand der jeweiligen Anlaufscheibe erreicht, so daß der Rotor eine hohe Drehzahl erreichen kann, so auf der elastischen Anlaufscheibe aufschwimmt und so die Verschleißwerte weiter herabgesetzt werden.

Besonders bevorzugt ist hierbei ein niederviskoses Schmiermittel, da hierbei ein besonders niedrigerer Reibwiderstand der Anlaufscheiben erreicht wird.

Wenn eine Ausnehmung in dem Stator zur Aufnahme der Anlaufscheiben gebildet wird, kann ein Austreten des Schmiermittels in bestimmten Bereichen des Motors sicher verhindert werden.

Ebenso ist es möglich, eine oder mehrere elastische Anlaufscheiben in jeweils einer Absenkung des Rotors anzuordnen. Durch eine kegelförmige Ausgestaltung der Ausnehmung bzw. Absenkung in dem Stator bzw. in dem Rotor kann sich das Schmiermittel, das bei einer Belastung der elastischen Anlaufscheibe aus dieser austritt, an vorgesehenen Stellen sammeln und bei einer Entlastung der elastischen Anlaufscheibe von dieser wieder aufgesaugt werden.

Durch einen Anschlag im Stator, mit der die axiale Bewegung der Rotorwelle bei der Montage zusätzlicher Bauteile auf die Rotorwelle begrenzbar ist, wird erreicht, daß die Bauteile axial auf die Rotorwelle aufgepresst werden können ohne die elastischen Anlaufscheiben übermäßig zu komprimieren und so die Strukturen der Anlaufscheiben nicht zu zerstören und die Menge des aus den elastischen Anlaufscheiben ausgepressten Schmiermittels zu begrenzen.

Ein Kapillarspalt zur Aufnahme von Schmiermitteln saugt Schmiermittel, die während des Betriebes und/oder der Montage ausgepresst werden auf. Bei Entlastung der Anlaufscheibe kann die Anlaufscheibe das Schmiermittel durch die Kapillarwirkung wieder aufnehmen.

Eine besonders einfache radiale Lagerung lässt sich dadurch realisieren, daß die Rotorwelle im Bereich der radialen Lagerstellen poliert ist.

Der Rotor ist besonders einfach herstellbar, wenn der Permanentmagnet in Kunststoff eingebettet ist.

Besonders kompakt lässt sich der Motor ausgestalten, wenn der Stator als Wickelkörper mit darauf aufgebrachten Spulen ausgestaltet ist und der Rotor innerhalb des Wickelkörpers angeordnet ist.

Besonders einfach realisieren lässt sich die vorgenannte Bauform, wenn auf dem Wickelkörper zwei sich kreuzende Spulen angebracht sind.

Wenn die Wechselströme in den einzelnen Spulen einen Phasenabstand haben, der der Lage der einzelnen Spulen zueinander entspricht, ist der Wirkungsgrad des Motors hoch.

Wenn die Wechselströme zusätzlich sinusförmig sind, wird ein besonders ruhiger, vibrationsarmer Lauf des Motors erreicht.

Durch seine ruhigen Laufeigenschaften lässt sich der vorgeschriebene Motor besonders gut als Lüftermotor mit einem auf die Rotorwelle aufgesetzten Lüfterrad betreiben.

Die Erfindung wird nachfolgend anhand der Figuren für ein besonders bevorzugtes Ausführungsbeispiel näher erläutert.

Es zeigen:
- Figur 1: einen Schnitt durch eine besonders bevorzugte Anlaufscheibe
- Figur 2: einen Teilschnitt durch einen besonders bevorzugten Rotor
- Figur 3: eine Ansicht und einen Teilschnitt eines besonders bevorzugten Motors mit ausgesetzten Lüfterrad mit einem Rotor aus Figur 2 und Anlaufscheiben aus Figur 1.
- Figur 4: den Teilschnitt A aus Figur 3

Eine elastische Anlaufscheibe 1 weist eine gummiartige Kunststoffmatrix 2, bspw. aus Weich-PVC auf, auf deren einen Seite Mikrofasern 3, bspw. aus Nylon-Schnittflock aufgebracht sind, die vorzugsweise stochastisch verteilt sind. Dadurch ergibt sich auch durch dauerndes Überstreichen in einer Richtung kein Kammeffekt. Die Fasern richten sich immer wieder auf und bilden kleine Kapillare, welche besonders geeignet sind, Flüssigkeiten aufzunehmen. Es ist auch möglich, eine einfache, evtl. nach einer Seite hin geschlossene Filzscheibe einzusetzen, wenn die Anforderungen nicht allzu hoch sind.

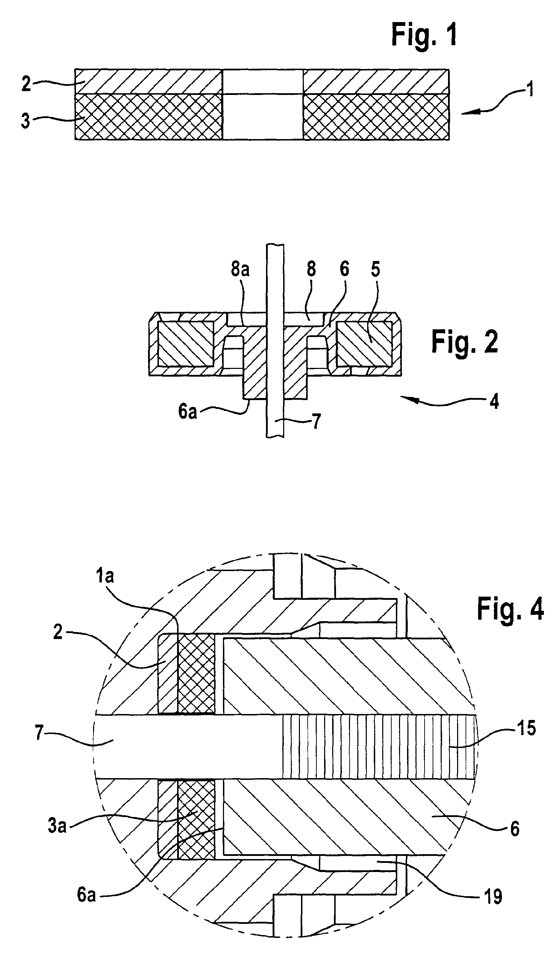

In Figur 2 weist ein Rotor 4 einen rotationssymetrischen ringförmigen Permanentmagneten 5 auf, der über einen Magnetträger 6 aus Kunststoff mit einer Rotorwelle 7 verbunden ist. Der Magnetträger 6 weist an seinem einen axialen Ende eine Anlauffläche 6a auf. An seinem anderen axialen Ende weist der Magnetträger 6 eine Absenkung 8 zur zumindest teilweisen Aufnahme einer elastischen Anlaufscheibe 1 mit einer Anlauffläche 8a auf.

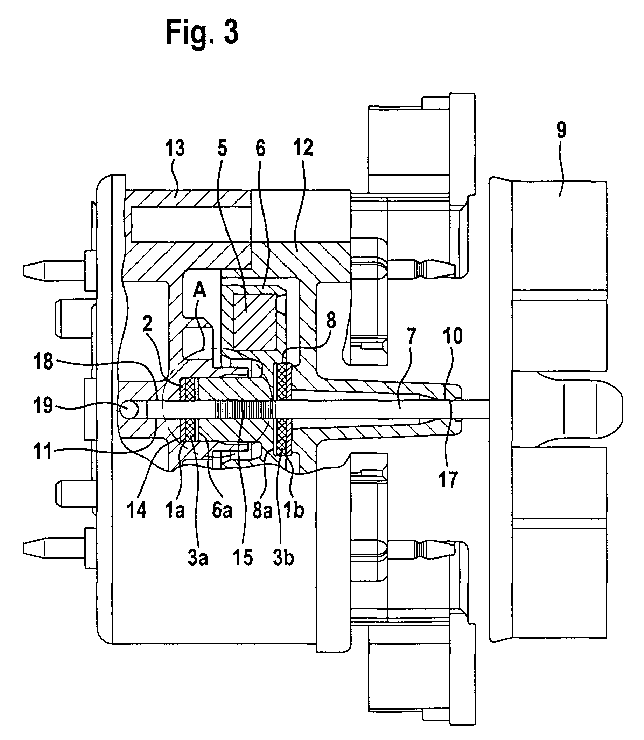

In Figur 3 ist der Rotor 4 aus Figur 2 mit einem Lüfterrad 9 versehen und radial in Lagerbereichen 10, 11 eines als Wickelkörper ausgestalteten Stators, der aus einem Wickelkörperoberteil 12 und einem Wickelkörperunterteil 13 besteht, gelagert. Axial ist der Rotor 4 schwimmend über zwei Anlaufscheiben 1a, 1b in der Absenkung 8 im Rotor 4 und einer Ausnehmung 14 im Wickelkörperunterteil 13 gelagert.

Der in den Magneträger 6 gebettete Permanentmagnet 5 ist auf die Rotorwelle 7 aufgepresst. Im entsprechenden Fügebereich der Rotorwelle 7 ist eine Aufrauung 15 zur Erhöhung des Festsitzes angebracht. Die Rotorwelle 7 ist in Bereichen der radialen Lagerung 17, 18 im Wickelkörper 12, 13 zur Reduzierung der Reibung poliert.

Die Anlaufscheiben 1a, 1b sind in der Absenkung 8 des Rotors 4 bzw. in der Ausnehmnung 14 des Wickelkörperunterteils 13 so angeordnet, daß die Seiten mit den Mikrofasern 3a, 3b den am Magnetträger 6 des Rotors 4 ausgebildeten Anlaufflächen 6a,8a zugewandt sind. Die Relativbewegung findet zwischen jeweils der Faserseite 3a,3b der Anlaufscheibe 1a, 1b und dem Rotor 4 mit den Anlaufflächen 6a, 6b statt. Die Anlaufscheiben 1a, 1b sind im Belastungsfall gegenüber dem als Wickelkörper 12,13 ausgebildeten Stator fest. Dies wird erreicht durch einen höheren Reibkoeffizienten der gummiartigen Kunststoffmatrix 2 gegenüber dem Stator als der Mikrofasern 3 gegenüber dem Rotor 4.

In die Fasern der Anlaufscheiben 1a, 1b ist niederviskoses Schmiermittel eingebracht.

Der Rotor 4 kann auch vollständig aus magnetischem Material bestehen.

In Figur 4 erkennt man einen Kapillarspalt 19, der Schmiermittel aufnehmen kann, das aus der Anlaufscheibe 1a ausgepresst wird.

Die Einbaulage des Motors ist beliebig, so dass je nach Anwendung die axiale Auflagekraft über die Anlaufscheibe 1a oder 1b in die Anlauffläche 6a oder 8a geleitet wird. Bei horizontaler Einbaulage werden beide Anlaufscheiben 1a, 1b abwechselnd belastet

Zum Aufsetzen des Lüfterrades 9 oder anderer Funktionselemente auf die Rotorwelle 7 muss einmalig eine sehr große axiale Kraft auf den Rotor aufgebracht werden. Bei diesem Vorgang wird die Anlaufscheibe 1a komprimiert, bis die Welle auf einen als Metallkugel ausgebildeten Anschlag 19 stößt. Der Anschlag 19 kann bei genügender Steifigkeit auch aus dem Kunststoff des als Wickelkörper 12,13 ausgebildeten Stators ausgebildet sein. Die Aufpresskräfte werden nun durch den Anschlag 19 aufgefangen, nicht durch die Anlaufscheibe 1a und den Magnetträger 6.

Das durch die Kompression ausgepresste Schmiermittel kann in den Kapillarspalt 19 treten. Nach dem Aufpressen entspannt sich die Anlaufscheibe 1a und das im Kapillarspalt 19 befindliche Schmiermittel wird zurück in die Fasern 3a der Anlaufscheibe 1a gesogen.

In der Absenkung 8 wird das Lager vor Schmiermittelverlust geschützt zum einen durch die oben beschriebene Kapillarwirkung der Fasern 3b und zum anderen durch die Anordnung der Anlaufscheibe 1b in der Absenknung 8 im Rotor 4. Hier sammelt sich das durch Rotation eventuell austretende Schmiermittel in der Eckkontur der Absenkung 8 und kann bei Stillstand durch Kapillarwirkung wieder in die Fasern 3b der Anlaufscheibe 1b zurückwandern.

## Patentansprüche

1. Elektromotor mit einem Stator und einem Rotor, wobei der Rotor mindestens einen Permanentmagneten und eine Rotorwelle aufweist und der Stator mindestens zwei Spulen aufweist, die Bestromung mit Wechselströmen ein sich drehendes Magnetfeld erzeugen, durch den Rotor antreibbar ist und die Rotorwelle radial und axial gelagert ist, **dadurch gekennzeichnet, daß** der Rotor (4) durch mindestens eine elastische Anlaufscheibe (1a,1b) gelagert ist, wobei eine Anlaufscheibe (1a) axial auf einer Seite des Rotors (4) angeordnet ist.

2. Elektromotor nach Anspruch 1, **dadurch gekennzeichnet, daß** eine zweite Anlaufscheibe (1b) auf der anderen Seite des Rotors (4)angeordnet ist und der Rotor (4)je nach seiner Lage ständig die erste oder zweite elastische Anlaufscheibe (1a, 1b) oder abwechselnd die erste und zweite Anlaufscheibe (1a, 1b) belastet.

3. Elektromotor nach einem der vorstehenden Ansprüche, **dadurch gekennzeichnet, daß** die Anlaufscheiben (1, 1a, 1b) aus einer gummiartigen Kunststoffmatrix (2)bestehen, auf der auf einer Seite Mikrofasern (3, 3a, 3b)aufgebracht sind. Elektromotor nach einem der vorstehenden Ansprüche, **dadurch gekennzeichnet, daß** das Schmiermittel in den Anlaufscheiben (1, 1a, 1b) niederviskos ist.

4. Elektromotor nach Anspruch 3, **dadurch gekennzeichnet, daß** die Seite mit den Mikrofasern (3, 3a, 3b) jeweils dem Rotor (4) zugewandt ist.

5. Elektromotor nach Anspruch 3 oder 4, **dadurch gekennzeichnet, daß** die Mikrofasern (3, 3a, 3b) stochastisch verteilt sind.

6. Elektromotor nach einem der vorstehenden Ansprüche, **dadurch gekennzeichnet, daß** Schmiermittel in den Anlaufscheiben (1, 1a, 1b) vorhanden ist

7. Elektromotor nach Anspruch 6, **dadurch gekennzeichnet, daß** das Schmiermittel in den Anlaufscheiben (1, 1a, 1b) niederviskos ist.

8. Elektromotor nach einem der vorstehenden Ansprüche, **dadurch gekennzeichnet, daß** mindestens eine Anlaufscheibe (1a) in einer Ausnehmung (14) des Stators angeordnet ist, die zur Aufnahme der Lagerscheibe (1a) ausgebildet ist.

9. Elektromotor nach einem der vorstehenden Ansprüche, **dadurch gekennzeichnet, daß** der Rotor (4) mindestens eine Absenkung (8) zur Aufnahme der zweiten Anlaufscheibe (1b) aufweist.

10. Elektromotor nach Anspruch 8 oder 9, **dadurch gekennzeichnet, daß** die Ausnehmungen (14) bzw. Absenkungen (8) des Stators bzw. des Rotors (4) kegelstumpfförmig ausgebildet sind.

11. Elektromotor nach einem der vorstehenden Ansprüche, **dadurch gekennzeichnet, daß** der Stator (12, 13) einen axialen Anschlag (20) aufweist, mit dem die axiale Bewegung der Rotorwelle (7) bei der Montage von zusätzlichen Bauteilen auf der Rotorwelle (7) begrenzbar ist.

12. Elektromotor nach einem der vorstehenden Ansprüche, **dadurch gekennzeichnet, daß** zwischen dem Rotor (4) und dem Stator (12, 13) ein Kapillarspalt (19) zur Aufnahme von Schmiermittel vorgesehen ist.

13. Elektromotor nach einem der vorstehenden Ansprüche, **dadurch gekennzeichnet, daß** die Rotorwelle (7) im radialen Lagerbereich (10, 11) poliert ist.

14. Elektromotor nach einem der vorstehenden Ansprüche, **dadurch gekennzeichnet, daß** der Rotor (4) einen in einen Magnetträger (6) gebetteten Permanentmagneten (5) aufweist.

15. Elektromotor nach Anspruch 1 bis 13, **dadurch gekennzeichnet, daß** er einen rotationssymetrischen Magneten aufweist, der starr mit der Rotorwelle (7) verbunden ist.

16. Elektromotor nach einem der vorstehenden Ansprüche, **dadurch gekennzeichnet, daß** der Stator als Wickelkörper (12, 13) ausgestaltet ist.

17. Elektromotor nach Anspruch 16, **dadurch gekennzeichnet, daß** mindestens zwei sich kreuzende Spulen auf dem Wickelkörper angebracht sind.

18. Elektromotor nach einem der vorstehenden Ansprüche, **dadurch gekennzeichnet, daß** die Wechselströme in den einzelnen Spulen einen Phasenabstand haben, der der Lage der einzelnen Spulen zueinander entspricht.

19. Elektromotor nach Anspruch 18, **dadurch gekennzeichnet, daß** die Wechselströme sinusförmig sind.

20. Elektromotor nach einem der vorstehenden Ansprüche, **dadurch gekennzeichnet, daß** auf der Rotorwelle ein Lüfterrad (9) befestigt ist.

21. Elektromotor nach Anspruch 20, **dadurch gekennzeichnet, daß** das Lüfterrad (9) auf die Rotorwelle (7) aufgepresst ist.
